(19) Europäisches Patentamt / European Patent Office / Office européen des brevets

(11) **EP 3 818 296 B1**

(12) **EUROPÄISCHE PATENTSCHRIFT**

(45) Veröffentlichungstag und Bekanntmachung des Hinweises auf die Patenterteilung:
**26.06.2024   Patentblatt 2024/26**

(21) Anmeldenummer: **19748683.0**

(22) Anmeldetag: **03.07.2019**

(51) Internationale Patentklassifikation (IPC):
***F17C 13/02*** *(2006.01)*

(52) Gemeinsame Patentklassifikation (CPC):
**B60K 15/03006; B60K 15/077; F17C 13/023;**
B60K 2015/03019; F17C 2201/0109;
F17C 2201/054; F17C 2201/056; F17C 2203/018;
F17C 2203/03; F17C 2205/0134; F17C 2205/0192;
F17C 2205/0196; F17C 2205/0364;
F17C 2221/012; F17C 2221/033;          (Forts.)

(86) Internationale Anmeldenummer:
**PCT/EP2019/067892**

(87) Internationale Veröffentlichungsnummer:
**WO 2020/007933 (09.01.2020 Gazette 2020/02)**

(54) **FAHRZEUG UND MESSVERFAHREN**

VEHICLE AND MEASUREMENT METHOD

VÉHICULE ET PROCÉDÉ DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018   DE 102018116423**

(43) Veröffentlichungstag der Anmeldung:
**12.05.2021   Patentblatt 2021/19**

(73) Patentinhaber: **Bundesrepublik Deutschland, Vertreten Durch Die Bundesministerin für Wirtschaft und Energie, Diese vertreten durch den Präsidenten der 12205 Berlin (DE)**

(72) Erfinder:
• **MAIR, Georg W.**
  **14979 Großbeeren (DE)**
• **SCHOPPA, André**
  **12529 Schönefeld (DE)**
• **SZCZEPANIAK, Mariusz**
  **14624 Dallgow Döberitz (DE)**

(74) Vertreter: **Zimmermann & Partner Patentanwälte mbB Postfach 330 920 80069 München (DE)**

(56) Entgegenhaltungen:
**DE-A1- 10 053 490          DE-A1- 19 519 712
DE-A1-102004 021 832          DE-A1-102004 050 827
DE-A1-102017 001 370          DE-B3-102015 218 230**

(52) Gemeinsame Patentklassifikation (CPC): (Forts.)
F17C 2223/0123; F17C 2223/0153;
F17C 2223/033; F17C 2223/036; F17C 2250/034;
F17C 2250/0421; F17C 2250/043;
F17C 2250/0439; F17C 2250/0469;
F17C 2250/0482; F17C 2260/026;
F17C 2270/0105; F17C 2270/0171;
F17C 2270/0173; F17C 2270/0176;
F17C 2270/0178; F17C 2270/0184;
F17C 2270/0189; Y02E 60/32

**Beschreibung**

Die vorliegende Erfindung betrifft ein Fahrzeug, insbesondere ein Fahrzeug mit einem Gasspeicher für komprimierte Gase wie bspw. komprimiertes Erdgas und komprimierter Wasserstoff oder ein anderes Treibgas, sowie ein Messverfahren zum Bestimmen eines Gewichts des Gasspeichers und/oder eines Gewichts einer Gasfüllung des Gasspeichers.

Ein solches Fahrzeug ist aus DE102004050827A1 bekannt.

Bisher werden Gasdruckbehälter und Treibgasspeicher üblicherweise nach Maßgabe des Drucks gefüllt. Da der Druck in einem geschlossenen Raum unmittelbar von der Temperatur abhängt, muss für eine druckgeregelte Füllung mit einer definierten Füllmenge die Temperatur im Druckbehälter homogen und genau bekannt sein. Da die Temperatur aber im Behälter ungleichmäßig stark durch eine Befüllung verändert wird, ist es im Zeitrahmen von wenigen Minuten bis Stunden nicht ohne erheblichen Aufwand möglich, die für eine exakte druckgesteuerte Füllung notwendige Information zur Temperaturverteilung zu bekommen. Insbesondere beim Befüllen von Fahrzeuggastanks an Tankstellen kann die inhomogene Temperatur am Tank nicht hinreichend zuverlässig gemessen und/oder nicht flächendeckend verlässlich mit der Tankstelle kommuniziert werden.

Damit ist die verbreitete Füllung von Fahrzeugstanks und anderen Gasdruckbehältern nach Maßgabe des Druckes innerhalb akzeptabler Füllzeiten ein relativ ungenauer Vorgang, der auch zu entsprechenden Unsicherheiten bei der Füllstandsmessung des Tanks führt. Insbesondere bei der schnellen Fahrzeugbefüllung ist bei Erreichen eines der Abbruchkriterien Maximaldruck oder Maximaltemperatur während des Füllvorgangs an der Tankstelle oft nicht eindeutig, wie viel Gas tatsächlich eingefüllt wurde. Zumindest ein Teil der Unsicherheit wird oft durch die Ungenauigkeit des tatsächlichen Füllgrads vor Beginn des Füllvorgangs verursacht. Im Ergebnis lässt sich jedenfalls die (verbleibende) Reichweite eines Fahrzeugs nur relativ ungenau bestimmen. Dies kann sogar zu einem unerwünschten Fahrzeugausfall aufgrund eines zu hoch eingeschätzten Restfüllgrad des Fahrzeugs führen.

Im Hinblick auf das oben Gesagte, schlägt die vorliegende Erfindung ein Fahrzeug gemäß Anspruch 1 und ein Messverfahren gemäß Anspruch 14 vor.

Gemäß einer Ausführungsform umfasst ein Fahrzeug ein Fahrgestell, einen Gasspeicher für ein Gas, insbesondere ein als Gasdruckbehälter ausgeführter Gasspeicher für ein komprimiertes Gas oder ein Flüssiggas, und eine zwischen dem Fahrgestell und dem Gasspeicher angeordnete und mit dem Fahrgestell und dem Gasspeicher verbundene erste Wägevorrichtung, die eingerichtet ist, eine vom Gasspeicher auf die erste Wägevorrichtung ausgeübte Kraft, insbesondere eine vom Gasspeicher auf die erste Wägevorrichtung ausgeübte Gewichtskraft zu messen. Insbesondere ist die erste Wägevorrichtung eingerichtet einen (ersten) Messwert für die vom Gasspeicher auf sie ausgeübte Gewichtskraft zu bestimmen.

Dieser Aufbau ermöglicht, das Gewicht des Gasspeichers inklusive einer Gasfüllung und damit bei bekanntem Leergewicht des Gasspeichers das Gewicht bzw. die Masse der Gasfüllung einfach und hinreichend genau zu bestimmen. Dies ermöglicht auch eine genauere Bestimmung einer Füllmenge beim Betanken des Gasspeichers als dies bei der gegebenen relativ kurzen gewünschten Betankungszeit mit einer Betankung nach dem Druck möglich ist. Da die Temperaturverteilung im System für die Bestimmung der Füllmenge über ein Wiegen praktisch bedeutungslos ist, können die oben genannten Nachteile einer Füllung nach Druck auf eine einfache Weise nämlich vermieden werden. Dies ermöglicht neben einer Überprüfung der Tankmenge / faireren Abrechnung beim Betanken auch eine genauere Bestimmung der (verbleibende) Reichweite des (motorisierten) Fahrzeugs, die unabhängig von Druck und Temperatur im Gasspeicher ist.

Bei dem Gasspeicher kann es sich insbesondere um einen Tank handeln, der fluidisch mit einer Brennstoffzelle in Verbindung mit einem Elektromotor, mit einem bivalenten Verbrennungsmotor und/oder einem monovalenten Gasmotor, zum Antrieb des Fahrzeugs verbunden ist.

Bei dem Gasspeicher kann es sich aber auch um einen Gasdruckspeicher für den Transport eines entsprechenden Gases handeln, das nicht oder zumindest nicht ausschließlich für den Antrieb des Fahrzeuges im Speziellen oder zum Verbrauch im Fahrzeug, allgemein, verwendet wird.

Es kann sogar vorgesehen sein, dass das Fahrzeug als Tankfahrzeug sowohl einen mit einem Motor verbundenen Gaspeicher als Treibgastank als auch einen Gasdruckspeicher für den Transport des Gases aufweist, die jeweilige Wägevorrichtungen aufweisen.

Der Aufbau des Gasspeichers, insbesondere der Aufbau der Wand des Gasspeichers kann an das zu speichernde Gas und/oder gemäß Sicherheitsanforderungen angepasst sein. Beispielsweise kann die Wand eines Gasspeichers zur Speicherung temperaturverflüssigte Gase eine Isolationsschicht aufweisen.

Aus Gründen der Einfachheit wird im Folgenden die im Gasspeicher gespeicherte Gasmenge (Gasmasse) auch als Tankinhalt bezeichnet.

Bei dem Fahrzeug kann es sich um ein Kraftfahrzeug für den Straßenverkehr, zum Beispiel einen PKW, einen Bus oder einen LKW, z.B. einen Tanklastwagen, aber auch um ein Schienenfahrzeug, ein Wasserfahrzeug oder ein Luftfahrzeug (mit Raketenantrieb zum Auftrieb, Verdrängungsauftrieb oder aerodynamischen Auftrieb) handeln.

Der Gasspeicher kann zumindest im Wesentlichen zylinderförmig sein, d.h. zumindest bis auf Endbereiche zylinderförmig ausgeführt sein. Beispielsweise kann der Gasspeicher einen zylinderförmigen Hauptabschnitt, der eine Längsachse des Gasspeichers definieren kann, und einen Endabschnitt oder zwei, in Richtung der Längsachse gegenüberliegende Endabschnitte aufweisen, wobei der Hauptabschnitt typischerweise zumindest 75 %, zumindest 80 % oder sogar mindestens 85 % des Innenvolumens des Gasspeichers bereitstellt. Im Folgenden werden die Endabschnitte auch als Enden des Gasspeichers bezeichnet. Insbesondere kann der Gasspeicher als Druckglasflasche ausgebildet sein.

Der Gasspeicher kann aber auch als Gasspeichersystem bzw. mehrteilig ausgebildet sein. Beispielsweise kann der Gasspeicher bzw. das Gasspeichersystem von zwei oder mehr mechanisch miteinander zumindest in Wesentlichen starr und fluidisch über eine Druckgasleitung bzw. mehrere Druckgasleitungen verbundenen Gasdruckflaschen gebildet werden.

Mit anderen Worten kann das Fahrzeug einen weiteren oder sogar mehrere weitere Gasspeicher für das Gas aufweisen der/die mechanisch starr und fluidisch mit dem Gasspeicher verbunden ist/sind. Aufgrund der mechanisch starren Verbindung der Gasspeicher ist es für eine hinreichend genaue Bestimmung des Tankinhalts ausreichend, wenn die von einem der Gasspeicher auf die erste Wägevorrichtung ausgeübte Kraft gemessen wird.

Außerdem ist/sind der Gasspeicher/die Gasspeicher typischerweise für einen Betriebsdruck von zumindest 100 bar, zumindest 200 bar, sogar zumindest 500 bar, oder sogar zumindest 700 bar ausgelegt. Im Fall von temperatur- oder druckverfüssigten Gasen ist von zumindest 10 bar, typischer zumindest 25 bar Prüfdruck auszugehen.

Aus Gründen der Einfachheit beziehen sich die folgenden Ausführungsbeispiele hauptsächlich auf einen Gasspeicher.

Beim Wiegen trägt die erste Wägevorrichtung typischerweise zumindest einen Teil des Gewichts des Gasspeichers.

Außerdem ist die erste Wägevorrichtung typischerweise fest mit dem Fahrgestell verbunden.

Typischerweise liegt der Gasspeicher zumindest beim Wiegen direkt oder indirekt auf der ersten Wägevorrichtung.

Insbesondere kann ein erstes Ende des Gasspeichers auf der ersten Wägevorrichtung aufliegen und/oder die erste Wägevorrichtung zum Wiegen einen Teil der Last des Gasspeichers tragen.

Außerdem kann die erste Wägevorrichtung einen Teil einer mit dem Fahrgestell verbundenen Lagerung für den Gasspeicher bilden.

Gemäß einer Weiterbildung weist das Fahrzeug eine zwischen dem Fahrgestell und dem Gasspeicher angeordnete und mit dem Fahrgestell und dem Gasspeicher verbundene zweite Wägevorrichtung auf, die eingerichtet ist, eine vom Gasspeicher auf die zweite Wägevorrichtung ausgeübte Kraft zu messen.

Typischerweise liegt dabei ein dem ersten Ende gegenüberliegendes zweites Ende des Gasspeichers zum Wiegen des Gasspeichers direkt oder indirekt auf der zweiten Wägevorrichtung.

Durch die Verwendung zweier Wägevorrichtungen, die mit jeweiligen Enden des Gasspeichers verbunden sind, kann die Führung des Gasspeichers beim Wiegen einfacher und/oder robuster ausgeführt werden. Außerdem kann das Gewicht des Gasspeichers bzw. der Tankinhalt durch Verwendung zweier Wägevorrichtung genauer und/oder zuverlässig ermittelt werden.

Auch die zweite Wägevorrichtung kann einen Teil der Lagerung bilden.

Typischerweise ist die erste und/oder die zweite jeweilige Wägevorrichtung als jeweilige Wägezelle ausgeführt. Beispielsweise können die Wägezelle einen jeweiligen Dehnungsmessstreifen aufweisen.

Die erste und/oder die zweite Wägevorrichtung kann auch ein anderes zur Wägung geeignetes Bauteil als eine Wägezelle, insbesondere einen Kraftaufnehmer (auch Kraftsensor genannt) aufweisen und/oder von diesem bereitgestellt werden, wobei das jeweilige Bauteil zumindest während der Messung an dem Kraftpfad vom Gasspeicher bis zum Fahrgestell und/oder einem (bzw. mehreren) Radlager(n) des Fahrzeugs beteiligt ist.

Um eine hinreichend genaue Messung der Füllmenge zu ermöglichen, hat die Wägevorrichtung bei gegebener Temperatur je nach Gasart und zu befüllender Gasmenge eine dem Nenndruck angemessene Gewichtsauflösung, die äquivalent zu einer Auflösung des Druckes im Gasspeichern eine Bestimmung der Gasmasse auf kleiner Schritte als 1% des Füllmaximums zulässt (z.B. zumindest 2 bar bei CNG-Speicher (Gasspeicher für komprimiertes Erdgas), oder z.B. 0,3 bar bei LPG (Autogas).

Die Umrechnung der Gewichtsauflösung in einer Auflösung des Druckes p kann z.B. anhand einer Zustandsgleichung realer Gase vorgenommen werden, insbesondere über die thermische Zustandsgleichung idealer Gase, die um einen Realgasfaktor Z ergänzt wurde:

$$p*V=Z*R*T.$$

Beispielsweise beträgt der Realgasfaktor für Erdgas bei einer Temperatur von T von 293,15 K (20°C) Z=0,813.

Damit erhält man für einen mit Erdgas (mit einer molaren Masse von 16,043 g/mol) bei einem Druck von 200 bar gefüllten 50 l Gasspeicher eine Masse m des eingefügten Erdgases von 8,096 kg. Unter diesen Bedingungen entspricht ein Druckunterschied von 1 bar ca. 40 g.

Dementsprechend hat die Wägevorrichtung typischerweise eine relative Gewichtsauflösung (Auflösung in kg / Wägebereich in kg) von zumindest 1% oder 0.5% sogar 0.4% (40 g / 10 kg).

Damit lassen sich erheblich genauere Messungen / Befüllungen als bei einer druckgesteuerten Gasbefüllung erreichen. Wenn ein 50 l Gasspeicher bis 200 bar Druck-geregelt mit Erdgas befüllt wird und es dabei zu einer angenommenen, effektiven mittleren Temperaturerhöhung auf 50°C kommt (auf 323,15°K, Realgasfaktor Z=0,879), wird der Gasspeicher nur mit ca. 6,7 kg befüllt, was einem Unterschied/Fehler von ca. 16 % entspricht!

Diese Beispielrechnung zeigt, dass im Vergleich zur Befüllung des Gasspeichers nach Druck, über eine Bestimmung der Gasmasse im Gasspeicher mittels Wägung, insbesondere einer laufenden Wägung der Gasmasse während des Füllvorgangs eines Gasspeichers (bspw. eines eines eingebauten Kfz-Tanks) eine deutlich genaue Bestimmung der Füllmenge (Masse) erreicht werden kann.

Insbesondere für hohe Drücke kann die gewünschte Gewichtsauflösung typischerweise genauer über Wertetabellen zu den p-T-m Beziehungen für die Gase oder Gasgemische bzw. zugehörigen Interpolationsfunktionen berechnet werden. Beispielsweise können die jeweiligen p-T-m Beziehungen der "REFPROP" Datenbank ("Reference Fluid Thermodynamic and Transport Properties Database") des NIST ("National Institute of Standards and Technology", Gaithersburg, Maryland, USA) entnommen werden.

Je nach zu befüllendem Gasspeicher kann der Wägebereich der Wägevorrichtung zumindest 10 kg oder sogar zumindest 1000 kg betragen.

Ein typischerweise mit Wasser ausgelitertes Innenvolumen des Gasspeichers kann mindestens 10l, mindestens 20l oder sogar von mindestens 150l betragen. Im Fall des Transportes von Gasen kann das ausgeliterte Innenvolumen mindestens 50 l, mindestens 500 oder sogar mindestens 5000 Liter mit den entsprechend höheren Wägebereich betragen.

Um eine möglichst genaue Bestimmung des Gewichts des Gasspeichers bzw. des Tankinhalts zu ermöglichen, kann das erste Ende und/oder das zweite Ende mit einer jeweiligen biege- und/oder verschiebeweichen Druckleitung verbunden sein, typischerweise über jeweilige Ventile (erstes bzw. zweites Ventil).

Typischerweise ist die Lagerung nämlich zumindest in einem ersten Zustand, der für ein Wiegen des Gasspeichers / Bestimmen seines Tankinhalts geeignet ist, so ausgeführt, dass sich der Gasspeicher bzw. dessen mit der jeweiligen Wiegevorrichtung / Wägezelle verbundenen Enden in Richtung der Arbeitsrichtung der jeweiligen Wiegevorrichtung / Wägezelle (typischerweise geführt) bewegen kann / können. Diese Bewegung und damit die Messgenauigkeit könnte von zu steifen Druckleitungen beeinträchtigt werden.

Die biege- und/oder verschiebeweichen Druckleitungen können einen Schlauch oder eine Rohrspirale aufweisen oder von einem Schlauch oder eine Rohrspirale gebildet werden.

Wenn es sich bei dem Gasspeicher um einen mit einem Motor verbundenen Gasspeicher (Tank) oder einem Transportspeicher handelt, können beide Enden des Gasspeichers mit einer jeweiligen biege- bzw. verschiebeweichen Druckleitung verbunden sein.

Das erste Ventil und/oder das zweite Ventil sind typischerweise steuerbar bzw. regelbar.

Typischerweise weist die Lagerung einen mit dem ersten Ende verbundenen ersten Lagerbock, noch typischer den ersten Lagerbock und eine erste Linearführung für den ersten Lagerbock auf.

Außerdem kann die Lagerung einen mit dem zweiten Ende verbundenen zweiten Lagerbock, typischer den zweiten Lagerbock und eine zweite Linearführung für den zweiten Lagerbock aufweisen.

Typischerweise ist die jeweilige Linearführung fest mit dem Fahrgestell des Fahrzeugs verbunden und/oder so ausgeführt, dass ihre Bewegungsrichtung zumindest im Wesentlichen, d.h. bis auf höchstens 5 % oder sogar höchstens 2 % mit einer Arbeitsrichtung der jeweiligen Wägevorrichtung übereinstimmt.

Außerdem kann die Lagerung eine erste Feder, zweite Feder, einen ersten Dämpfer und/oder einen zweiten Dämpfer aufweisen.

Dabei kann die erste Feder in einem vorgespannten Zustand so in der Lagerung angeordnet sein, dass sie eine entsprechende Federkraft (Federvorspannung) auf den ersten Lagerbock in Richtung der ersten Wägevorrichtung (Arbeitsrichtung der ersten Wägevorrichtung), typischerweise von oben nach unten ausübt.

Analog dazu kann die zweite Feder in einem vorgespannten Zustand so in der Lagerung angeordnet sein, dass sie eine entsprechende Federkraft (Federvorspannung) auf den zweiten Lagerbock in Richtung der zweiten Wägevorrichtung (Arbeitsrichtung der zweiten Wägevorrichtung), typischerweise von oben nach unten ausübt.

Aufgrund der (vorgespannten) ersten und/oder zweiten Feder wird der jeweilige Lagerbock und damit der Gasspeicher in Richtung der Wägevorrichtung(en), z.B. nach unten gedrückt. Dadurch kann verhindert werden, dass der Gasspeicher beim Fahren aufgrund auftretender Erschütterungen stärkerer Bewegungen in der jeweiligen Linearführung ausführt. Aus diesem Grund sind typischerweise auch jeweilige Dämpfer zum Dämpfen der Bewegung des Gasspeichers bzw. der jeweiligen Lagerböcke vorgesehen. Außerdem kann durch die Verwendung von vorgespannten Federn und /oder Dämpfern und die damit verbundene geringere Bewegung bzw. höhere Dämpfung der Bewegung (kürzere Abklingzeit) auch die Gewichtsmessung während eines kurzen Stopps des Fahrzeugs und oder sogar während der Fahrt des Fahrzeugs erleichtert werden.

Wenn der Tankinhalt während der Fahrt bestimmt/berechnet wird, erfolgt dies typischerweise unter Berücksichtigung von einem oder mehreren (mittels einem oder mehrerer mit dem Gasspeicher verbundener bzw. am Gasspeicher angebrachter Beschleunigungssensoren bestimmten) Messwerten (Messdaten) zur Beschleunigung des Gasspeichers in vertikaler Richtung (parallel zur Erdbeschleunigung).

Gemäß einer Weiterentwicklung weist die Lagerung ein erstes Arretierelement zum Arretieren des ersten Lagerbocks in Bewegungsrichtung der ersten Linearführung (Arbeitsrichtung der ersten Wägevorrichtung), und/oder ein zweites Arretierelement zum Arretieren des zweiten Lagerbocks in Bewegungsrichtung der zweiten Linearführung (Arbeitsrichtung der zweiten Wägevorrichtung) auf. Dadurch kann der jeweilige Lagerbock und damit der Gasspeicher durch das erste und/oder zweite Arretierelement während der Fahrt des Fahrzeugs zuverlässig fixiert werden.

Das jeweilige Arretierelement kann als Stempel, Spindel oder Dorn ausgeführt sein.

Außerdem weist die Lagerung typischerweise ein jeweiliges Antriebsmittel zum Bewegen des Arretierelements zwischen seiner jeweiligen Arretierposition und seiner jeweiligen nichtarretierenden Position (in der eine Wägung des Gasspeichers möglich ist) auf. Dabei kann es sich beispielsweise um einen jeweiligen Elektromotor oder ein Pneumatik- oder Hydraulickolben handeln.

Insbesondere kann vorgesehen sein, dass das Arretierelement bzw. die Arretierelemente in die Bewegungsrichtung der jeweiligen Linearführung (durch das jeweilige Antriebsmittel) bewegbar ist. Dadurch kann der Gasspeicher beim Arretieren von den Wägevorrichtungen wegbewegt werden. In diesem unbelasteten Zustand sollte die Wägevorrichtung bzw. die Wägevorrichtungen einen jeweiligen typischerweise kleinen Referenzmesswert liefern. Dadurch kann eine etwaige Drift der jeweiligen Wägevorrichtung während der typischerweise sehr lange Betriebszeit von bis zu mehreren Jahren berücksichtigt werden.

Typischerweise ist der Gasspeicher (einseitig) in Richtung seiner Längsachse beweglich gelagert. Dadurch können mechanische Spannungen vermieden werden, die anderenfalls aufgrund einer Änderung der Ausdehnung des Gasspeichers Richtung seiner Längsachse aufgrund von Druckveränderung beim Betanken bzw. während der Fahrt auftreten können, zuverlässig vermieden werden. Insbesondere kann das zweite Ende des Gasspeichers in Richtung der Längsachse des Gasspeichers beweglich gelagert sein (in diese Richtung als Loslager ausgeführt sein), und das erste Ende in alle translatorischen Richtungen fixiert sein (Festlager).

Typischerweise weist die Lagerung einen ersten Zustand (nicht-arretierten Zustand) auf, in dem der Gasspeicher in einer weiteren Richtung, die zumindest im Wesentlichen senkrecht zur Längsachse des Gasspeichers und/oder zumindest im Wesentlichen parallel zur Arbeitsrichtung der ersten und/oder zweiten Wägevorrichtung ist, relativ zum Fahrgestell beweglich gelagert, typischerweise geführt beweglich gelagert, noch typischer mit einer Federvorspannung lastet und/oder gedämpft geführt beweglich gelagert ist.

Gemäß einer Weiterbildung weist die Lagerung einen zweiten Zustand (arretierter Zustand) auf, in dem der Gasspeicher, das erste Ende und/oder das zweite Ende in der weiteren Richtung zumindest im Wesentlichen nichtbeweglich mit dem Fahrgestell verbunden / in der weiteren Richtung zumindest im Wesentlichen nichtbeweglich zum dem Fahrgestell gelagert ist/sind.

Es kann aber auch vorgesehen sein, dass das zweite Ende des Gasspeichers translatorisch fixiert, z.B. mittels eines Klemmlagers gelagert, aber um eine zumindest im Wesentlichen horizontal orientierte erste Achse drehbar gelagert ist, d.h. um eine erste Achse drehbar gelagert, deren Winkelabweichung von der Horizontalen maximal 10° oder sogar nur maximal 3° beträgt. Damit ist auch der Gasspeicher im nicht-arretierten Zustand drehbar um erste Achse gelagert.

Klemmlager wie eine ein- oder zweiteilige Schelle mit Gewindestift und verklemmte Lagerhalbschalen sind wieder lösbare Verbindung zwischen typischerweise runden Bauelementen bzw. Bauelementabschnitten. Klemmlager können aus einem Formteil oder mehreren Formteilen (z.B. Prismen, Halbrohren, Schelle) aus Stahl oder einem anderen geeigneten Material bestehen. Insbesondere kann ein Klemmlager einen als Hals oder Boss ausgeführten Abschnitt des zweiten Endes des Gasspeichers aufnehmen. Die Klemmwirkung/Kraftübertragung erfolgt aufgrund einer angemessenes Verspannen der Formteile des Klemmlagers durch Reibschluss, ggf. unterstützt durch Formschluss, teilweise auch durch kalkulierte Deformation. Beispielsweise kann die Klemmwirkung mit kalkulierter Deformation durch typischerweise gerade, auf den runden Hals des Gasspeichers wirkende Prismen erzielt werden.

Das Klemmlager kann translatorisch in alle Richtungen fest mit dem Rahmen verbunden sein und eine Rotation um die erste Achse zulassen. Typischerweise hemmt das Klemmlager aber eine Rotationsbewegung des Gaspufferspeichers um zur ersten Achse senkrecht orientierte Achsen. Damit kann die Drehbewegung des Gasspeichers beim Befüllen / Entleeren des Gasspeichers zumindest im Wesentlichen auf eine Drehbewegung um die erste Achse eingeschränkt werden. Dies erleichtert auch eine störunanfällige Wägung des Gasspeichers / Tankinhalts.

Typischerweise weist das Fahrzeug eine mit der ersten und/oder der zweiten Wägevorrichtung verbundene Mess- und/oder Auswerteeinheit und/oder eine mit der ersten und/oder der zweiten Wägevorrichtung und/oder der Mess- und/oder Auswerteeinheit verbundene Füllstandsanzeige für den Tankinhalt auf.

Die Mess- und/oder Auswerteeinheit kann einen Teil einer Fahrzeugsteuerung des Fahrzeug bilden, die typischerweise mit dem Motor, den Ventilen und weiteren Komponenten des Fahrzeugs verbunden ist.

Die Mess- und/oder Auswerteeinheit kann zudem mit einem am Gasspeicher angebrachten Beschleunigungssensor zum Messen einer Beschleunigung des Gasspeichers verbunden sein.

Beispielsweise kann vorgesehen sein, eine Gewichtsmessung mittels der ersten und/oder der zweiten Wägevorrichtung nur dann vorzunehmen, wenn ein vom Beschleunigungssensor gemessene (absolute) Beschleunigungswert unter einem vorgegebenen Schwellenwert liegt, zum Beispiel dann, wenn das Fahrzeug steht und etwaige Schwingungen des Gasspeichers abgeklungen sind.

Es kann aber auch vorgesehen sein, dass die Beschleunigung und das Gewicht des Gasspeichers während der Fahrt gemessen wird und die gemessenen Beschleunigungswerte zur Korrektur der gemessenen Gewichtswerte des Gasspeichers verwendet werden. Auf diese Weise können fahrtbedingte Unregelmäßigkeiten im Messwert für das Gewicht korrigiert werden.

Außerdem kann aus Sicherheitsgründen an dem Gasspeicher ein Temperatursensor angeordnet sein.

Der Temperatursensor ist typischerweise mit der Fahrzeugsteuerung, der Mess- und/oder Auswerteeinheit und/oder der Anzeigeeinheit verbunden.

Typischerweise ist die Mess- und/oder Auswerteeinheit bzw. die Fahrzeugsteuerung eingerichtet ist, das Öffnen des ersten Ventils zum Befüllen des Gasspeichers erst dann auszulösen, wenn ein vom Temperatursensor übermittelter Temperaturmesswert einen vorgebbaren ersten Temperaturschwellenwert erreicht oder unterschreitet.

Außerdem kann die Mess- und/oder Auswerteeinheit bzw. die Fahrzeugsteuerung (aus Sicherheitsgründen) eingerichtet sein, das Schließen des ersten Ventils auszulösen, wenn der vom Temperatursensor übermittelte Temperaturmesswert einen vorgebbaren zweiten Temperaturschwellenwert erreicht oder überschreitet.

Außerdem kann nicht zuletzt aus Sicherheitsgründen ein mit dem Gasspeicher fluidisch verbundener Drucksensor vorgesehen sein.

Beispielsweise kann die Mess- und/oder Auswerteeinheit bzw. die Fahrzeugsteuerung eingerichtet sein, das Schließen des ersten Ventils auszulösen, wenn ein vom Drucksensor übermittelter Druckmesswert einen vorgebbaren Druckschwellenwert erreicht oder überschreitet.

Im Folgenden wird die Mess- und/oder Auswerteeinheit auch als Messeinheit bezeichnet.

Typischerweise ist die Messeinheit eingerichtet, die im Folgenden erläuternden Messverfahren auszuführen.

Während einer Ortsveränderung des Fahrzeuges, ob aktiv (mit eigenem Antrieb) oder passiv (z.B. mittels Abschleppfahrzeug, Fähre oder Reisezug), kann es bei hohen Beschleunigungen zu starken dynamischen Belastungen der Lagerung des Gasspeichers (Gastank) im Fahrzeug kommen, die ihrerseits auch die Messgenauigkeit der ersten und/oder zweiten Wägevorrichtung beeinflussen können. Eine vergleichbare Wirkung kann auch aufgrund einer vergleichsweise stark veränderten Ausdehnung des Fahrzeuges selbst aufgrund einer hohen oder niedrigen Umgebungstemperatur auftreten. Beispielsweise könnte aus einer zu einer plastischen Deformation führenden lokalen Überlast eine Verschiebung/Verzerrung der Kalibrierung oder eine andere unerwünschte Veränderung des Verhaltens der Wägevorrichtung(en) (Wägezelle(n)) resultieren.

Um dies zu vermeiden und/oder eine selbständige Kalibrierung zu ermöglichen, kann vorgesehen sein, die Lagerung des Gasspeichers, insbesondere im Bereich der Wägevorrichtung(en), im bzw. für den Bedarfsfall (hoher Kräfte bzw. mechanischer Spannungen) durch Kraftumlagerung zu entlasten.

Eine einfache Möglichkeit der Kraftumlagerung, d.h. Umleitung des Kraftflusses um die Wägevorrichtung(en) besteht in einer (zeitweiligen bzw. bedarfsabhängigen) Versteifung der Lagerung.

Alternativ oder ergänzend kann ein jeweiliges paralleles Lager im Bedarfsfall aktiviert werden.

Beispielsweise kann eine zeitweilige Fixierung und/oder Versteifung der Lagerung (insbesondere der Enden) des Gasspeichers in eine Arbeitsrichtung der jeweiligen Wiegevorrichtung / Wägezelle vorgesehen sein. Der Zustand der zeitweiligen Fixierung und/oder Versteifung der Lagerung kann dem zweiten Zustand der Lagerung entsprechen, in dem der Gasspeicher, das erste Ende und/oder das zweite Ende sogar zumindest im Wesentlichen nichtbeweglich mit dem Fahrgestell verbunden ist/sind.

Diese Fixierung und/oder Versteifung bzw. die damit verbundene Entlastung kann auch automatisch erfolgen, z.B. wenn "die Zündung" des Fahrzeugs nicht aktiviert ist (deaktiviert wird) oder sich das Fahrzeug in Bewegung setzt.

Gemäß einer Ausführungsform weist ein Messverfahren die Schritte des Bestimmens eines ersten Messwerts mit der ersten Wägevorrichtung eines hierin erläuterten Fahrzeugs, und des Verwendens des ersten Messwerts zum Berechnen eines Gewichts des Gasspeichers des Fahrzeugs und/oder eines Gewichts einer Gasfüllung des Gasspeichers auf.

Typischerweise weist das Messverfahren ein Bestimmen eines zweiten Messwerts mit der zweiten Wägevorrichtung des Fahrzeugs und ein Verwenden des zweiten Messwerts zum Berechnen des Gewichts des Gasspeichers und/oder des Gewichts der Gasfüllung des Gasspeichers auf.

Außerdem kann vorgesehen sein, eine auf den Gasspeicher während des Bestimmens des ersten bzw. zweiten Messwerts wirkende Federkraft beim Berechnen des Gewichts des Gasspeichers und/oder des Gewichts der Gasfüllung des Gasspeichers zu berücksichtigen.

Typischerweise wird das berechnete Gewicht des Gasspeichers und/oder das Gewicht der Gasfüllung des Gasspeichers gespeichert, weiterverarbeitet oder/oder weitergeleitet.

Beispielsweise kann das berechnete jeweilige Gewicht mit vorherigen und/oder nachfolgenden Gewichtswerten verglichen und/oder gemittelt werden, und/oder auf einer Anzeigevorrichtung des Fahrzeugs ausgegeben werden.

Weiterhin kann vorgesehen sein, die Lagerung des Fahrzeugs vor dem Bestimmen des ersten Messwerts und/oder des zweiten Messwerts in den ersten Zustand zu überführen.

Außerdem kann vorgesehen sein, den ersten und/oder zweiten Messwert erst dann zu bestimmen, wenn ein zeitgleich oder im (vermeintlich) ruhenden Zustand zuvor und danach mit dem Beschleunigungssensor gemessener Beschleunigungswert unterhalb eines Beschleunigungsschwellwert liegt. Es ist aber auch möglich, den ersten und/oder zweiten Messwert entsprechend gemessener Beschleunigungswerte rechnerisch zu korrigieren.

Alternativ oder ergänzend kann vorgesehen sein, den zeitgleich gemessenen Beschleunigungswert bei der Berechnung des Gewichts des Gasspeichers oder des Gewichts der Tankfüllung zu berücksichtigen.

Außerdem kann vorgesehen sein, mit dem Temperatursensor und/oder Drucksensor ermittelte Messwerte (aus Sicherheitsgründen) für die Steuerung eines Befüllvorgangs des Gasspeichers zu verwenden (Öffnen/Schließen von Ventilen etc.) und/oder für eine Vergleichsrechnung zur Plausibilitätsüberprüfung des bestimmten Gewichts heranzuziehen.

Typischerweise werden der erste Messwert und/oder der zweite Messwert mehrfach bestimmt und zur Berechnung eines jeweiligen Gewichts des Gasspeichers bzw. der Gasfüllung des Gasspeichers verwendet.

Das Bestimmen des ersten und/oder zweiten Messwerts sowie das Berechnen des Gewichts des Gasspeichers bzw. der Gasfüllung kann besonders einfach und mit hoher Genauigkeit erfolgen, wenn das Fahrzeug steht, z.B. während eines kurzen Stopps an einer Ampel, während eines Befüllens des Gasspeichers (Tanks) mit einem Gas aus einem gefüllten Gaspufferspeicher (einer Tankstelle), und/oder während eines Befüllens des Gaspufferspeichers mit einem im Gasspeichers (eines Tanklaster) gespeicherten Gas erfolgt.

Außerdem kann vorgesehen sein, im Bedarfsfall eine Fixierung und/oder Versteifung der Lagerung des Gasspeichers zu aktivieren, z.B. in Abhängigkeit von der Zündung des Fahrzeugs und/oder einem Bewegungszustand des Fahrzeugs, z.B. wenn sich das Fahrzeug in Bewegung setzt oder in Bewegung gesetzt wird, und/oder die Fixierung bzw. Versteifung vor einer Messung (Bestimmung der Messwerte) zu deaktivieren.

Die vorstehend beschriebenen Ausführungsformen können beliebig miteinander kombiniert werden.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:

Fig. 1A eine schematische Seitenansicht eines Fahrzeugs mit einem Gasspeicher gemäß einem Ausführungsbeispiel;

Fig. 1B eine schematische Querschnittsansicht des in Fig. 1A gezeigten Fahrzeugs gemäß einem Ausführungsbeispiel;

Fig. 1C eine perspektivische Ansicht des in Fig. 1A gezeigten Fahrzeugs gemäß einem Ausführungsbeispiel;

Fig. 2A eine weitere schematische Seitenansicht des in Fig. 1A gezeigten Fahrzeugs gemäß einem Ausführungsbeispiel;

Fig. 2B eine weitere schematische Querschnittsansicht des in Fig. 1A gezeigten Fahrzeugs gemäß einem Ausführungsbeispiel;

Fig.2C eine weitere schematische Seitenansicht des in Fig. 1A gezeigten Fahrzeugs gemäß einem Ausführungsbeispiel;

Fig.2D eine weitere schematische Querschnittsansicht des in Fig. 1A gezeigten Fahrzeugs gemäß einem Ausführungsbeispiel;

Fig. 3A eine schematische Seitenansicht eines Fahrzeugs mit einem Gasspeicher gemäß einem Ausführungsbeispiel;

Fig. 3B eine schematische Querschnittsansicht des in Fig. 3A gezeigten Fahrzeugs gemäß einem Ausführungsbeispiel;

Fig. 3C eine weitere schematische Querschnittsansichtsansicht des in Fig. 3A gezeigten Fahrzeugs gemäß einem Ausführungsbeispiel;

Fig. 4 eine schematische Seitenansicht eines Fahrzeugs mit einem Gasspeicher gemäß einem Ausführungsbeispiel;

Fig. 5 eine schematische Seitenansicht eines Fahrzeugs mit einem Gasspeicher gemäß einem Ausführungsbeispiel; und

Fig. 6 ein Blockdiagramm eines Messverfahrens gemäß einem Ausführungsbeispiel.

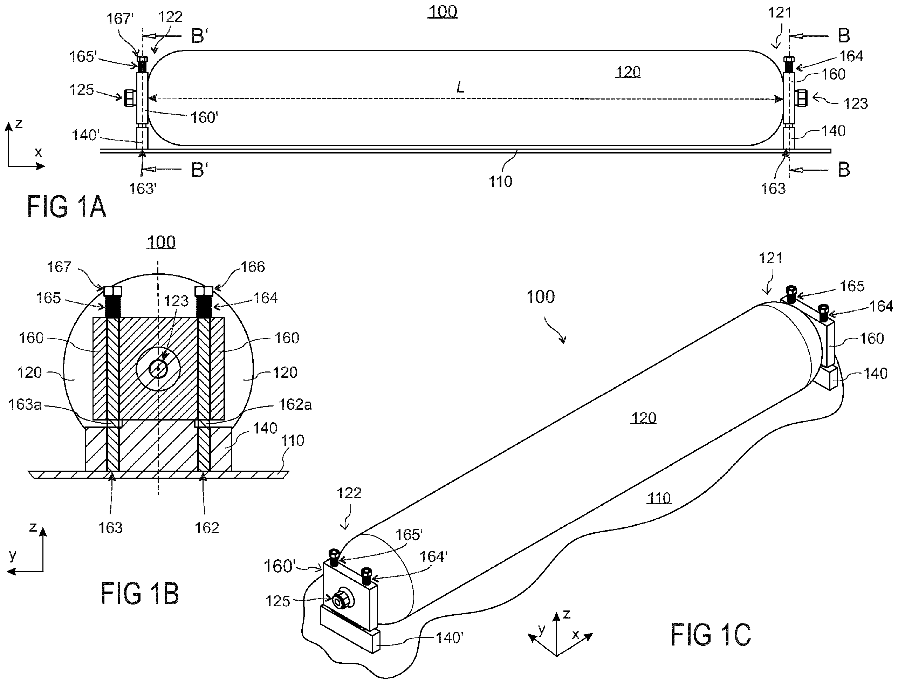

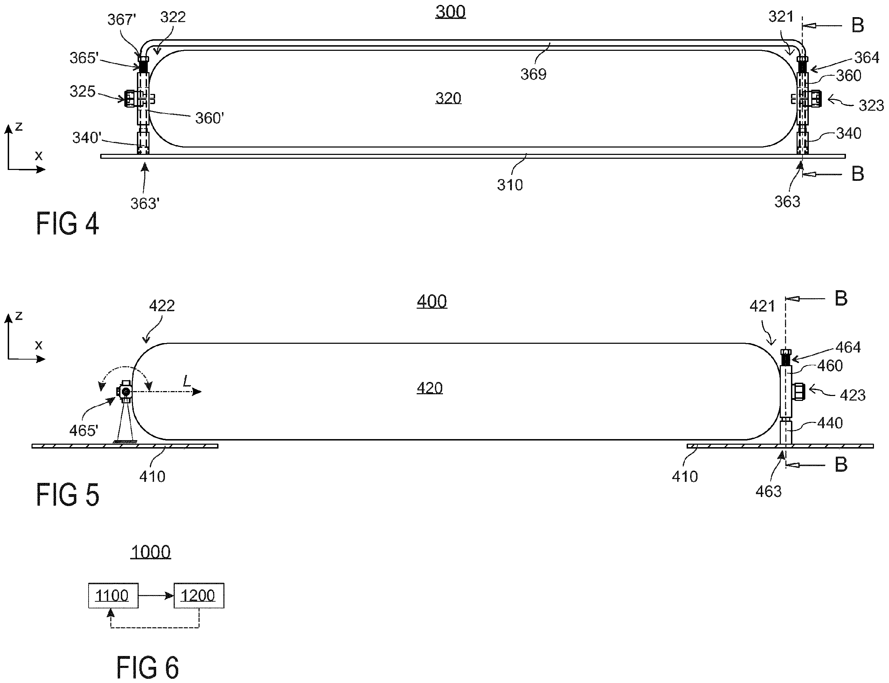

In den Figuren 1A bis 5 bezeichnen gleiche Bezugszeichen bzw. Bezugszeichen, deren letzte beiden Ziffern übereinstimmen entsprechend ähnliche Teile oder Elemente. Beispielsweise kann ein in Figur 1A mit einem Bezugszeichen 120 versehenes Teil einem gleichen oder ähnlichen Teil in Figur 5 mit einem Bezugszeichen 410 entsprechen.

Zur besseren Orientierung wird in den Figuren 1A bis 5 jeweils ein Kartesisches Koordinatensystem mit dargestellt, wobei die z-Richtung die vertikale Richtung repräsentiert und die x-bzw. y-Richtung zueinander orthogonal horizontale Richtungen repräsentieren.

Fig. 1A zeigt eine schematische Seitenansicht bzw. Querschnittsansicht eines inneren Teils eines Fahrzeugs 100, das ein Kraftfahrzeug sein kann. Dementsprechend ist nur ein Teil des Fahrgestells 110 bzw. der Karosserie sowie ein Gasspeicher 120 des Fahrzeugs 100 und dessen Lagerung 163, 163' mit integrierten Wägevorrichtungen 140, 140' dargestellt.

Aus Gründen der Übersichtlichkeit wird auf die Darstellung weiterer Details des Fahrzeugs 100, beispielsweise eines mit dem Entnahmeanschluss 125 des Gasspeichers 100 über eine Druckleitung (nicht dargestellt) und ein Ventil (nicht dargestellt) fluidisch verbindbaren Gasmotors und eines mit dem Füllanschluss 125 des Gasspeichers 100 über eine weitere Druckleitung (nicht dargestellt) und ein weiteres Ventil (nicht dargestellt) fluidisch verbindbaren Tankanschluss verzichtet.

Wie aus Figur 1A sowie Figur 1B, die einer Querschnittsdarstellung des Fahrzeugs 100 entlang der in Figur 1A gezeigten Linie BB entspricht, und Figur 1C, die einer perspektivischen Ansicht des Fahrzeugs 100 entspricht, ersichtlich wird, ist der exemplarische Gasspeicher 120 im wesentlichen zylindersymmetrisch.

Außerdem ist die Längsachse L der Gasspeichers 120 im Normalbetrieb des Fahrzeugs 100 im Wesentlichen typischerweise parallel zum Untergrund, beispielsweise horizontal orientiert. In dem exemplarischen Ausführungsbeispiel wird der Gasspeicher 120 an seinen beiden Enden 121, 122 über einen jeweiligen Lagerbock 160, 160' auf der ersten Wägevorrichtung 140 und der zweiten Wägevorrichtung 140' gelagert.

Dazu ist das erste Ende 121 des Gasspeichers 120 fest mit dem ersten Lagerbock 160 und das zweite Ende 122 des Gasspeichers 120 fest mit dem zweiten Lagerbock 160' verbunden. Die beiden Lagerböcke 160, 160' ruhen auf der ersten bzw. der zweiten Wägevorrichtung 140, 140'.

Wie detaillierter in Figur 1B für das erste Ende 121 dargestellt wird, weist die Lagerung eine Linearführung 163 auf, die eine geführte Bewegung des ersten Lagerbocks 140 in z-Richtung erlaubt, die der Arbeitsrichtung der ersten Wägevorrichtung 140 entspricht.

Dies gilt analog auch für das zweite Ende als 122. Da ein Querschnitt entlang der Linie B'B' in Figur 1A typischerweise analog zur Figur 1B ist, wird auf eine entsprechende detaillierte Schnittdarstellung für das zweite Ende 122 jedoch verzichtet.

In dem exemplarischen Ausführungsbeispiel wird die Linearführung 162, 163 mittels zweier Führungselemente 162a, 163a, die als Führungsstifte oder Führungsschiene ausgeführt sein können, realisiert.

Wie in Figur 1B weiter dargestellt wird, können die Führungselemente 162a, 163a fest mit dem Fahrgestell 110 verbunden sein und sowohl durch die erste Wägevorrichtung 140 als auch den ersten Lagerbock 140 geführt sein.

Dementsprechend können die typischerweise fest mit dem Fahrgestell 110 verbundene erste Wägevorrichtung 140 als auch der erste Lagerbock 140 entsprechende in z-Richtung orientierte Durchgangsöffnungen für die Führungselemente 162a 163a aufweisen.

Wie in Figur 1B weiter detailliert dargestellt wird, kann oberhalb des ersten Lagerbocks 160 ein jeweiliger erster Feder-Dämpfer 164, 165 auf einen oberen Abschnitt der Führungselemente 162a 163a geschoben und so mittels einer jeweiligen Mutter 166, 167 mit dem jeweiligen Führungselement 162a 163a verbunden sein, dass über die Feder-Dämpfer 164, 165 eine Vorspannung auf den ersten Lagerbock 160 und damit die erste Wägevorrichtung 140 ausgeübt wird.

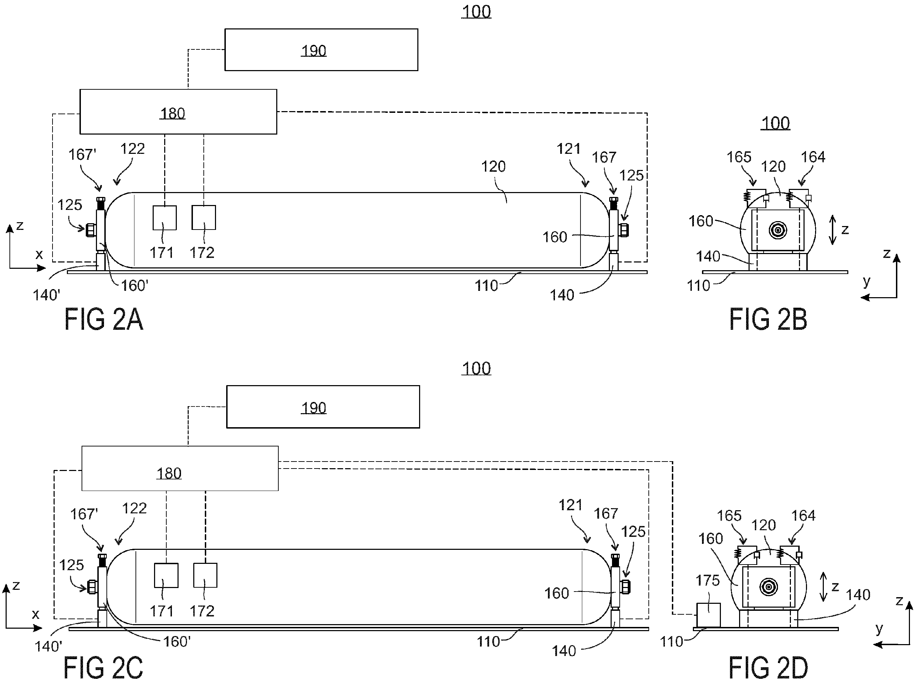

Diese Wirkung der Feder-Dämpfer 164, 165 wird in den Figuren 2B, 2D durch die Verwendung entsprechender Schaltungssymbole symbolisiert.

Wie in Figur 2A, die eine weitere schematische Seitenansicht des Fahrzeugs 100 zeigt, dargestellt wird, sind die beiden Wägevorrichtungen 140, 140' über entsprechende, als gestrichelt Linien dargestellte Datenverbindungen typischerweise mit einer Mess- und/oder Auswerteeinheit 180 des Fahrzeugs 100 verbunden, die typischerweise einen Teil einer Fahrzeugsteuerung des Fahrzeugs 100 bildet. Dabei können Datenverbindungen Datenleitungen eines Feldbusses (z.B. eines CAN-Bus) aber auch drahtlosen Verbindungen entsprechen.

Die Mess- und/oder Auswerteeinheit 180 ist eingerichtet, von der ersten Wägevorrichtung 140 erhaltene erste Messdaten und von der zweiten Wägevorrichtung 140' erhaltene zweite Messdaten zu speichern und/oder zu verarbeiten, insbesondere die ersten und/oder zweiten Messdaten zum Berechnen des Gewichts/der Masse des Tankinhalts zu verwenden.

Außerdem können die berechneten Gewichte bzw. Massen des Tankinhalts auf einer mit der Mess- und/oder Auswerteeinheit 180 über eine entsprechende Datenverbindung verbundene Ausgabeeinheit 190, zum Beispiel ein Display ausgegeben werden.

Weiterhin kann die Mess- und/oder Auswerteeinheit 180 über entsprechende Datenverbindungen mit einem Temperatursensor 171, der in oder an dem Gasspeicher 120 angebracht sein kann, und/oder mit einem Drucksensor 172, der im fluidischen Kontakt mit dem Innenraum des Gasspeichers 120 steht, verbunden sein.

Wie bereits oben erläutert wurde, können Messwerte des Temperatursensors 171 und oder des Drucksensors 172 von der Mess- und/oder Auswerteeinheit 180 bzw. der Fahrzeugsteuerung zu Vergleichsrechnungen und/oder zur Steuerung (insbesondere beim Betanken des Gasspeichers 120) nichtdargestellter, mit den Anschlüssen 125 bzw. 123 fluidisch verbundener Ventile verwendet werden.

Wie in den Figuren 2C und 2D dargestellt wird, kann die Mess- und/oder Auswerteeinheit 180 über eine entsprechende Datenverbindung mit einem Beschleunigungssensor 175 verbunden sein, der am Fahrgestell 110 angebracht ist.

Alternativ dazu kann der Beschleunigungssensor 175 auch am Gasspeicher 120 angebracht sein.

Wie ebenfalls bereits oben erläutert wurde, können Messwerte des Beschleunigungssensors 175 von der der Mess- und/oder Auswerteeinheit 180 bei der Berechnung des Gewichts bzw. der Masse des Tankinhalts berücksichtigt werden und/oder dazu verwendet werden, Messwerte der Wägevorrichtungen 140, 140' nur dann zu erheben bzw. zu berücksichtigen, z.B. für eine Mittelung, wenn die vom Beschleunigungssensors 175 ermittelten Beschleunigungswerte unterhalb eines entsprechenden (vorgegebenen) Schwellenwertes liegen.

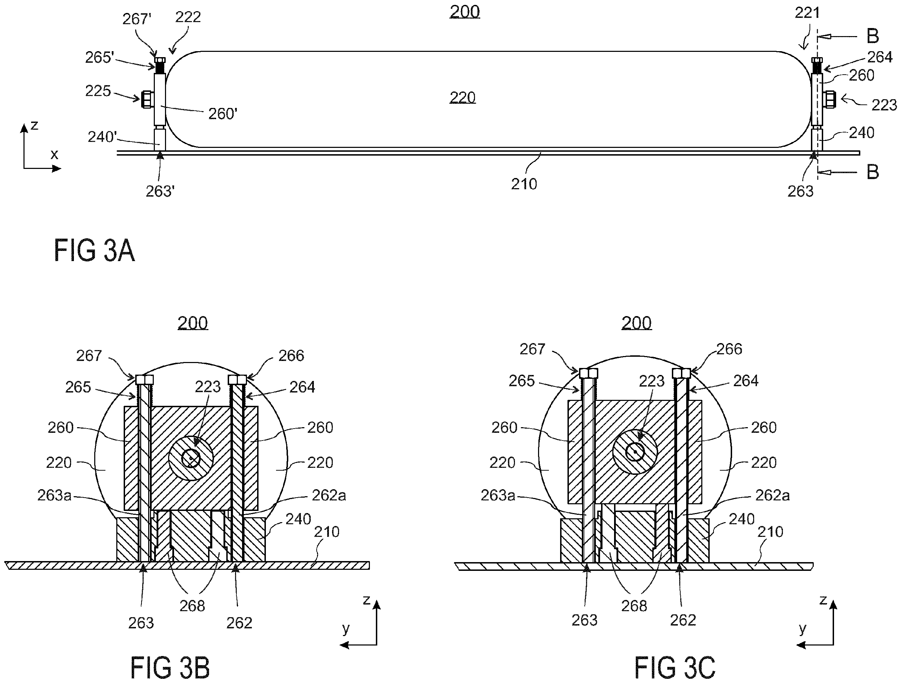

Fig. 3A zeigt eine schematische Seitenansicht bzw. Querschnittsansicht eines inneren Teils eines Fahrzeugs 200. Das Fahrzeug 200 ist typischerweise ähnlich zum oben mit Bezug zu den Figuren 1A bis 2D erläuternden Fahrzeug 100. Das Fahrzeug 200 hat ebenfalls einen Gasspeicher 220 als Tank für ein Treibgas wie komprimiertes Erdgas und ist typischerweise ebenfalls ein Kraftfahrzeug. Es unterscheidet sich vom Fahrzeug 100 jedoch hinsichtlich der Lagerung des Gasspeichers 220.

Wie in den Figuren 3B und 3C detaillierter illustriert wird, die Querschnittsdarstellungen entlang der Linie BB in Figur 3A repräsentieren, weist die Lagerung des Gasspeicher 220 typischerweise an jedem der beiden Enden 221, 222 zwei als Stifte, Stempel, Spindeln oder Dorne ausgeführte Arretierelemente 268 zum Anheben und Arretieren des jeweiligen Lagerbocks 260, 260' auf. Aus Gründen der Übersichtlichkeit wird jedoch auf entsprechende Querschnittsdarstellungen für das zweite Ende 222 verzichtet.

Figur 3B repräsentiert einen ersten Zustand der Lagerung, in dem die Arretierelemente 268 eingefahren sind und die erste Wägezelle 240 über den ersten Lagerbock 260 mit einem Gewichtsanteil von typischerweise zumindest im Mittel ca. 50% der Gesamtmasse des Gasspeichers 220 belastet ist. Im ersten Zustand kann, insbesondere dann, wenn das Fahrzeug 200 steht, z.B. beim Tanken, eine einfache und zuverlässige Bestimmung der Gesamtmasse / des Gesamtgewichts des Gasspeichers 220 anhand der von den Wägevorrichtungen 240, 240' ermittelten Messwerte und auf dieser Basis eine Bestimmung der Masse / des Gewichts des Tankinhalts erfolgen.

Figur 3C repräsentiert einen zweiten Zustand der Lagerung, in dem die Arretierelemente 268 ausgefahren sind und der erste Lagerbock 240 angehoben und zumindest weitgehend arretiert ist. Der zweite Zustand der Lagerung ist zwar ungeeignet für die Bestimmung der Masse / des Gewichts des Tankinhalts. Mit ihm können aber ungewollte Schwingungen des Gasspeichers 220 während der Fahrt des Fahrzeugs 200 zumindest weitgehend verhindert werden.

Fig. 4 zeigt eine schematische Seitenansicht bzw. Querschnittsansicht eines inneren Teils eines Fahrzeugs 300. Das Fahrzeug 300 ist typischerweise ähnlich zu den oben mit Bezug zu den Figuren 1A bis 3C erläuternden Fahrzeugen 100, 200. Das Fahrzeug 300 hat ebenfalls einen Gasspeicher 320 als Tank für ein Treibgas und ist typischerweise ebenfalls ein Kraftfahrzeug. Die Lagerung des Gasspeichers 320 weist jedoch einen stabilisierenden zusätzlichen Verbinder, insbesondere einen rohrförmigen und/oder bügelförmigen Verbinder 369 zwischen dem ersten Ende 321 und dem zweiten Ende 322 auf.

Fig. 5 zeigt eine schematische Seitenansicht bzw. Querschnittsansicht eines inneren Teils eines Fahrzeugs 400. Das Fahrzeug 400 ist typischerweise ähnlich zu den oben mit Bezug zu den Figuren 1A bis 4 erläuternden Fahrzeugen 100, 200, 300. Das Fahrzeug 400 hat ebenfalls einen Gasspeicher 420 als Tank für ein Treibgas und ist typischerweise ebenfalls ein Kraftfahrzeug. Das Fahrzeug 400 hat jedoch nur eine erste Wägevorrichtung 440 zum Messen einer Auflagekraft am ersten Ende 421 des Gasspeichers 410. Außerdem ist die Lagerung des zweiten Endes 422 des Gasspeichers 420 anders ausgeführt als die Lagerung des ersten Endes 421, die ähnlich oder identisch zur Lagerung des ersten Endes der Fahrzeuge 100 bis 400 ausgeführt sein kann.

In dem exemplarischen Ausführungsbeispiel wird für die Lagerung des zweiten Endes 422 ein Klemmlager 465' verwendet.

Das Klemmlager 465' jedoch am Rahmen 410, zum Beispiel an einer Bodenplatte oder Querstrebe 410 befestigt.

Das Klemmlager 465' ist typischerweise so ausgeführt, dass der Gasspeicher 420 um eine erste, in y-Richtung orientierte Achse beweglich ist. Beispielsweise kann das Klemmlager 465' so ausgeführt sein, dass eine Längsachse "L" des Gasspeichers 420 zumindest um mehrere Grad oder sogar mehrere 10° um die erste Achse bewegbar ist. Diese Werte können aber von der Form und insbesondere von der Länge des Gasspeichers (Abstand zwischen den Enden 421, 422) abhängen.

Außerdem kann das Klemmlager 465' so ausgeführt sein, dass eine Bewegung des Gasspeichers 420 um weitere Achsen gehemmt ist.

Außerdem kann ein Tonnenlager oder Rollenlager zwischen dem Gasspeichers 420 und dem ersten Lagerbock 460 vorgesehen. Dadurch kann ein Einfluss einer Verkippung auf die Gewichtsmessung mittels der ersten Wägevorrichtung 440 zuverlässig vermieden werden.

Im Folgenden wird mit Bezug zur Fig. 6 ein Messverfahren 1000 erläutert.

Zunächst kann in einem Block 1100 ein erster Messwert mit der ersten Wägevorrichtung eines hierin beschriebenen Fahrzeugs bestimmt werden.

Im anschließenden Block 1200 kann der erste Messwert zum Bestimmen eines Gewichts des Gasspeichers des Fahrzeugs und/oder eines Gewichts einer Gasfüllung des Gasspeichers verwendet werden.

Dabei wird das Gewicht der Gasfüllung typischerweise als Differenz des Gesamtgewichts zum Leergewicht des Gasspeichers inklusive des Gewichts des bzw. der Lagerböcke bestimmt.

Außerdem wird beim Bestimmen des Gewichts der Gasfüllung typischerweise eine etwaige auf den Gasspeicher wirkenden Federkraft abgezogen.

Wie durch den gestrichelten Pfeil in Figur 6 dargestellt wird, kann das Verfahren 1000 mehrfach wiederholt werden, zum Beispiel während des Betankens des Gasspeichers mit einem verflüssigten oder komprimierten Gas, während eines Zwischenstopps des Fahrzeugs oder sogar während der Fahrt des Fahrzeugs.

Gemäß einer Ausführungsform umfasst ein Fahrzeug ein Fahrgestell, einen Gasspeicher für ein Gas, insbesondere ein als Gasdruckbehälter ausgeführter Gasspeicher für ein verflüssigtes oder komprimiertes Gas, und eine zwischen dem Fahrgestell und dem Gasspeicher angeordnete und mit dem Fahrgestell und dem Gasspeicher verbundene erste Wägevorrichtung, die eingerichtet ist, einen Messwert zu bestimmen (ermitteln), der mit einer vom Gasspeicher auf die erste Wägevorrichtung ausgeübten Kraft, insbesondere mit einer vom Gasspeicher auf die erste Wägevorrichtung ausgeübten Gewichtskraft korreliert ist.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

**Bezugszeichenliste**

| | |
|---|---|
| 100, 200, 300, 400 | Fahrzeug |
| 110, 210, 310, 410 | Fahrgestell |
| 120, 220, 320, 420 | Gasspeicher |
| 140, 240, 340, 440 | erste Wägevorrichtung |
| 140', 240', 340' | zweite Wägevorrichtung |
| 121, 221, 321, 421 | erstes Ende des Gasspeichers |
| 122, 222, 322, 422 | zweites Ende des Gasspeichers |
| 123, 223, 323, 423 | Entnahmeanschluss des Gasspeichers (motorseitig) |
| 125, 225, 325 | Füllanschluss des Gasspeichers |
| 160, 260, 360, 460 | erster Lagerbock |
| 160', 260', 360' | zwei der Lagerbock |
| 162, 163, 262, 263, 363, 463 | erste Linearführung |
| 162', 163', 263', 363' | zweite Linearführung |
| 162a, 163a | Führungselement (Stift, Schiene) der ersten Linearführung |
| 164, 165, 264, 265, 364, 464 | erste Feder / Feder-Dämpfer-Einheit |
| 164', 165', 265', 365' | zweite Feder / Feder-Dämpfer-Einheit |
| 166, 167, 167', 266, 267' | Muttern |
| 171 | Temperatursensor |
| 172 | Drucksensor |

| 175 | Beschleunigungssensor |
| 180 | Mess- und/oder Auswerteeinheit |
| 190 | Anzeigeeinheit / Display |
| 268 | Arretierelement |
| 369 | Verbinder, Bügel |
| 465' | Klemmlager |
| 1000 | Messverfahren |
| 1100, 1200 | Verfahrensschritte |

**Patentansprüche**

1. Fahrzeug (100, 200, 300, 400), umfassend:

   - ein Fahrgestell (110, 210, 310, 410);
   - einen Gasspeicher (120, 220, 320, 420) für ein Gas;
   - eine zwischen dem Fahrgestell (110, 210, 310, 410) und dem Gasspeicher (120, 220, 320, 420) angeordnete und mit dem Fahrgestell (110, 210, 310, 410) und dem Gasspeicher (120, 220, 320, 420) verbundene erste Wägevorrichtung (140, 240, 340, 440), die eingerichtet ist, eine vom Gasspeicher (120, 220, 320, 420) auf die erste Wägevorrichtung (140, 240, 340, 440) ausgeübte Kraft zu messen; und
   - eine mit dem Fahrgestell (110, 210, 310, 410) verbundene Lagerung für den Gasspeicher (120, 220, 320, 420), die zeitweise fixiert und/oder versteift werden kann.

2. Fahrzeug nach Anspruch 1, wobei der Gasspeicher (120, 220, 320, 420) zumindest im Wesentlichen zylinderförmig ist, ein erstes Ende (121, 221, 321, 421) aufweist, ein dem ersten Ende (121, 221, 321, 421) gegenüberliegendes zweites Ende (122, 222, 322, 422) aufweist, und/oder eine Längsachse (L) aufweist, und/oder wobei das zweites Ende (122, 222, 322, 422) in Richtung der Längsachse (L) zum erstes Ende (121, 221, 321, 421) gegenüberliegend angeordnet ist.

3. Fahrzeug nach einem der vorhergehenden Ansprüche, wobei das Fahrzeug eine zwischen dem Fahrgestell (110, 210, 310, 410) und dem Gasspeicher (120, 220, 320, 420) angeordnete und mit dem Fahrgestell (110, 210, 310, 410) und dem Gasspeicher (120, 220, 320, 420) verbundene zweite Wägevorrichtung (140', 240', 340') aufweist, die eingerichtet ist, eine vom Gasspeicher (120, 220, 320) auf die zweite Wägevorrichtung (140, 240, 340) ausgeübte Kraft zu messen.

4. Fahrzeug nach Ansprüchen 2 und 3, wobei das zweite Ende (122, 222, 322, 422) des Gasspeichers (120) auf der zweiten Wägevorrichtung (140', 240', 340) aufliegt, und/oder wobei die zweite Wägevorrichtung (140', 240', 340) einen Teil der Lagerung (160, 260, 360, 460) bildet.

5. Fahrzeug nach einem der Ansprüche 2 bis 4, wobei die Lagerung einen mit dem ersten Ende (121, 221, 321, 421) verbundenen ersten Lagerbock (160, 260, 360, 460) aufweist.

6. Fahrzeug nach Anspruch 5, wobei die Lagerung eine erste Linearführung (162, 163, 262, 263, 363, 463) für den ersten Lagerbock (160, 260, 360, 460) aufweist.

7. Fahrzeug nach Anspruch 6, wobei die Lagerung ein erstes Arretierelement (268) zum Arretieren des ersten Lagerbocks in Bewegungsrichtung (z) der ersten Linearführung (262, 263) aufweist.

8. Fahrzeug nach einem der Ansprüche 2 bis 7, wobei die Lagerung einen mit dem zweiten Ende (122, 222, 322, 422) verbundenen zweiten Lagerbock (160', 260', 360') aufweist.

9. Fahrzeug nach Anspruch 8, wobei die Lagerung eine zweite Linearführung (162', 163', 263', 363') für den zweiten Lagerbock (160', 260', 360') aufweist.

10. Fahrzeug nach Anspruch 9, wobei die Lagerung ein zweites Arretierelement (268) zum Arretieren des zweiten Lagerbocks in Bewegungsrichtung (z) der zweiten Linearführung (263') aufweist.

11. Fahrzeug nach einem der Ansprüche 2 bis 10, wobei die Lagerung einen ersten Zustand aufweist, in dem der Gasspeicher (120, 220, 320, 420) in einer weiteren Richtung (z), die senkrecht zur Längsachse des Gasspeichers (120) ist, relativ zum Fahrgestell (110, 210, 310, 410) beweglich gelagert ist, und/oder wobei die weitere Richtung (z) einer Arbeitsrichtung der ersten Wägevorrichtung (140, 240, 340, 440) und/oder der zweiten Wägevorrichtung (140', 240', 340', 440') entspricht.

12. Fahrzeug nach Anspruch 11, wobei die Lagerung einen zweiten Zustand aufweist, in dem der Gasspeicher (120, 220, 320, 420), das erste Ende (121, 221, 321, 421) und/oder das zweite Ende (122, 222, 322, 422) in der weiteren Richtung (z) zumindest im Wesentlichen nichtbeweglich mit dem Fahrgestell (110, 210, 310, 410) verbunden sind.

13. Fahrzeug nach einem der Ansprüche 2 bis 12, wobei die Lagerung für den Gasspeicher (120, 220, 320, 420) so ausgeführt ist, dass das erste Ende (121, 221, 321, 421) des Gasspeichers (120) in eine Arbeitsrichtung (z) der ersten Wägevorrichtung (140, 240, 340, 440) zeitweise fixiert und/oder versteift werden kann, und/oder wobei die Lagerung für den Gasspeicher (120, 220, 320, 420) so ausgeführt ist, dass das zweite Ende (122, 222, 322, 422) des Gasspeichers (120) in eine Arbeitsrichtung (z) der zweiten Wägevorrichtung (140', 240', 340', 440') zeitweise fixiert und/oder versteift werden kann.

14. Messverfahren (1000) an einem Fahrzeug nach einem der Ansprüche 1-13, umfassend:

   - Deaktivieren einer Fixierung und/oder einer Versteifung der Lagerung des Gasspeichers (120); danach
   - Bestimmen eines ersten Messwerts mit der ersten Wägevorrichtung (140, 240, 340) des Fahrzeugs; und
   - Verwenden des ersten Messwerts zum Berechnen eines Gewichts des Gasspeichers (120) des Fahrzeugs und/oder eines Gewichts einer Gasfüllung des Gasspeichers (120).

15. Messverfahren nach einem der Ansprüche 14, wobei die Bestimmung des ersten Messwertes mehrfach, während das Fahrzeug steht, während eines Befüllens des Gasspeichers (120) mit einem Gas aus einem gefüllten Gaspufferspeicher, und/oder während eines Befüllens eines Gaspufferspeichers mit einem im Gasspeichers (120) gespeicherten Gas oder während der Fahrt erfolgt.

## Claims

1. A vehicle (100, 200, 300, 400), comprising:

   - a chassis (110, 210, 310, 410);
   - a gas storage tank (120, 220, 320, 420) for a gas; and
   - a first weighing device (140, 240, 340, 440) arranged between the chassis (110, 210, 310, 410) and the gas storage tank (120, 220, 320, 420) and connected to the chassis (110, 210, 310, 410) and the gas storage tank (120, 220, 320, 420), the first weighing device (140, 240, 340, 440) being configured to measure a force exerted by the gas storage tank (120, 220, 320, 420) on the first weighing device (140, 240, 340, 440); and
   - a bearing arrangement for the gas storage tank (120, 220, 320, 420) which is connected to the chassis (110, 210, 310, 410) and can be temporarily fixed and/or stiffened.

2. The vehicle according to claim 1, wherein the gas storage tank (120, 220, 320, 420) is at least substantially cylindrical, comprises a first end (121, 221, 321, 421), a second end (122, 222, 322, 422) opposite the first end (121, 221, 321, 421), and/or comprises a longitudinal axis (L), and/or wherein the second end (122, 222, 322, 422) is arranged opposite the first end (121, 221, 321, 421) in the direction of the longitudinal axis (L).

3. The vehicle according to any of the preceding claims, wherein the vehicle comprising a second weighing device (140', 240', 340') arranged between the chassis (110, 210, 310, 410) and the gas storage tank (120, 220, 320, 420) and connected to the chassis (110, 210, 310, 410) and the gas storage tank (120, 220, 320, 420), the second weighing device (140', 240', 340') being configured to measure a force exerted by the gas storage tank (120, 220, 320) on the second weighing device (140, 240, 340).

4. The vehicle according to claims 2 and 3, wherein the second end (122, 222, 322, 422) of the gas storage tank (120) rests on the second weighing device (140', 240', 340'), and/or wherein the second weighing device (140', 240', 340') forms part of the bearing arrangement (160, 260, 360, 460).

5. The vehicle according to any one of claims 2 to 4, wherein the bearing arrangement comprising a first bearing block (160, 260, 360, 460) connected to the first end (121, 221, 321, 421).

6. The vehicle according to claim 5, wherein the bearing arrangement comprises a first linear guide (162, 163, 262, 263, 363, 463) for the first bearing block (160, 260, 360, 460).

7. The vehicle according to claim 6, wherein the bearing arrangement comprises a first locking element (268) for locking the first bearing block in the direction of movement (z) of the first linear guide (262, 263).

8. The vehicle according to any one of claims 2 to 7, wherein the bearing arrangement comprises a second bearing block (160', 260', 360') connected to the second end (122, 222, 322, 422).

9. The vehicle according to claim 8, wherein the bearing arrangement comprises a second linear guide (162', 163', 263', 363') for the second bearing block (160', 260', 360').

10. The vehicle according to claim 9, wherein the bearing arrangement comprises a second locking element (268) for locking the second bearing block in the direction of movement (z) of the second linear guide (263').

11. The vehicle according to any one of claims 2 to 10, wherein the bearing arrangement comprises a first state in which the gas storage tank (120, 220, 320, 420) is movably mounted relative to the chassis (110, 210, 310, 410) in a further direction (z) which is perpendicular to the longitudinal axis of the gas storage tank (120), and/or wherein the further direction (z) corresponds to a working direction of the first weighing device (140, 240, 340, 440) and/or the second weighing device (140', 240', 340', 440').

12. The vehicle according to claim 11, wherein the bearing arrangement comprises a second state in which the gas storage tank (120, 220, 320, 420), the first end (121, 221, 321, 421) and/or the second end (122, 222, 322, 422) are connected to the chassis (110, 210, 310, 410) at least substantially immovably in the further direction (z).

13. The vehicle according to any one of claims 2 to 12, wherein the bearing arrangement for the gas storage tank (120, 220, 320, 420) is implemented such that the first end (121, 221, 321, 421) of the gas storage tank (120) can be temporarily fixed and/or stiffened in a working direction (z) of the first weighing device (140, 240, 340, 440), and/or wherein the bearing arrangement for the gas storage tank (120, 220, 320, 420) is implemented such that the second end (122, 222, 322, 422) of the gas storage tank (120) can be temporarily fixed and/or stiffened in a working direction (z) of the second weighing device (140', 240', 340', 440').

14. A measuring method (1000) on a vehicle according to any one of claims 1 - 13, comprising:

    - deactivating a fixation and/or a stiffening of the bearing arrangement for the gas storage tank (120); then
    - determining a first measured value with the first weighing device (140, 240, 340) of the vehicle; and
    - using the first measured value to calculate a weight of the gas storage tank (120) of the vehicle and/or a weight of a gas filling of the gas storage tank (120).

15. The measuring method according to claim 14, wherein the determining of the first measured value is carried out several times while the vehicle is stationary, during a filling of the gas storage tank (120) with a gas from a filled gas buffer storage tank, and/or during a filling of a gas buffer storage tank with a gas stored in the gas storage tank (120) or while driving.

**Revendications**

1. Véhicule (100, 200, 300, 400) comprenant :

    - un châssis (110, 210, 310, 410) ;
    - un accumulateur de gaz (120, 220, 320, 420) pour un gaz ;
    - un premier dispositif de pesée (140, 240, 340, 440) relié au châssis (110, 210, 310, 410) et à l'accumulateur de gaz (120, 220, 320, 420) et agencé entre le châssis (110, 210, 310, 410) et l'accumulateur de gaz (120, 220, 320, 420) qui est conçu afin de mesurer une force exercée par l'accumulateur de gaz (120, 220, 320, 420) sur le premier dispositif de pesée (140, 240, 340, 440) ; et

un logement relié au châssis (110, 210, 310, 410) pour l'accumulateur de gaz (120, 220, 320, 420) qui peut être fixé et/ou rigidifié temporairement.

2. Véhicule selon la revendication 1, dans lequel l'accumulateur de gaz (120, 220, 320, 420) est au moins sensiblement en forme de cylindre, présente une première extrémité (121, 221, 321, 421), présente une deuxième extrémité (122, 222, 322, 422) opposée à la première extrémité (121, 221, 321, 421) et/ou présente un axe longitudinal (L) et/ou dans lequel la deuxième extrémité (122, 222, 322, 422) est agencée en direction de l'axe longitudinal (L) à l'opposé de la première extrémité (121, 221, 321, 421).

3. Véhicule selon l'une quelconque des revendications précédentes, dans lequel le véhicule présente un deuxième dispositif de pesée (140', 240', 340') relié au châssis (110, 210, 310, 410) et à l'accumulateur de gaz (120, 220, 320, 420) et agencé entre le châssis (110, 210, 310, 410) et l'accumulateur de gaz (120, 220, 320, 420) qui est conçu afin de mesurer une force exercée par l'accumulateur de gaz (120, 220, 320) sur le deuxième dispositif de pesée (140, 240, 340).

4. Véhicule selon les revendications 2 et 3, dans lequel la deuxième extrémité (122, 222, 322, 422) de l'accumulateur de gaz (120) repose sur le deuxième dispositif de pesée (140', 240', 340) et/ou dans lequel le deuxième dispositif de pesée (140', 240', 340) forme une partie du logement (160, 260, 360, 460).

5. Véhicule selon l'une quelconque des revendications 2 à 4, dans lequel le logement présente un premier support de palier (160, 260, 360, 460) relié à la première extrémité (121, 221, 321, 421).

6. Véhicule selon la revendication 5, dans lequel le logement présente un premier guidage linéaire (162, 163, 262, 263, 363, 463) pour le premier support de palier (160, 260, 360, 460).

7. Véhicule selon la revendication 6, dans lequel le logement présente un premier élément d'arrêt (268) pour l'arrêt du premier support de palier dans le sens de déplacement (z) du premier guidage linéaire (262, 263).

8. Véhicule selon l'une quelconque des revendications 2 à 7, dans lequel le logement présente un deuxième support de palier (160', 260', 360') relié à la deuxième extrémité (122, 222, 322, 422).

9. Véhicule selon la revendication 8, dans lequel le logement présente un deuxième guidage linéaire (162', 163', 263', 363') pour le deuxième support de palier (160', 260', 360').

10. Véhicule selon la revendication 9, dans lequel le logement présente un deuxième élément d'arrêt (268) pour l'arrêt du deuxième support de palier dans le sens de déplacement (z) du deuxième guidage linéaire (263').

11. Véhicule selon l'une quelconque des revendications 2 à 10, dans lequel le logement présente un premier état, dans lequel l'accumulateur de gaz (120, 220, 320, 420) est logé de manière mobile dans un autre sens (z) qui est perpendiculaire à l'axe longitudinal de l'accumulateur de gaz (120), par rapport au châssis (110, 210, 310, 410) et/ou dans lequel l'autre sens (z) correspond à un sens de travail du premier dispositif de pesée (140, 240, 340, 440) et/ou du deuxième dispositif de pesée (140', 240', 340', 440').

12. Véhicule selon la revendication 11, dans lequel le logement présente un deuxième état, dans lequel l'accumulateur de gaz (120, 220, 320, 420), la première extrémité (121, 221, 321, 421) et/ou la deuxième extrémité (122, 222, 322, 422) sont reliées dans l'autre sens (z) au moins sensiblement de manière immobile au châssis (110, 210, 310, 410).

13. Véhicule selon l'une quelconque des revendications 2 à 12, dans lequel le logement pour l'accumulateur de gaz (120, 220, 320, 420) est réalisé de sorte que la première extrémité (121, 221, 321, 421) de l'accumulateur de gaz (120) dans un sens de travail (z) du premier dispositif de pesée (140, 240, 340, 440) puisse être fixée et/ou rigidifiée temporairement, et/ou dans lequel le logement pour l'accumulateur de gaz (120, 220, 320, 420) est réalisé de sorte que la deuxième extrémité (122, 222, 322, 422) de l'accumulateur de gaz (120) puisse être fixée et/ou rigidifiée temporairement dans un sens de travail (z) du deuxième dispositif de pesée (140', 240', 340', 440').

14. Procédé de mesure (1000) au niveau d'un véhicule selon l'une quelconque des revendications 1 à 13 comprenant :

  - la désactivation d'une fixation et/ou d'un raidissement du logement de l'accumulateur de gaz (120) ; ensuite
  - la détermination d'une première valeur de mesure avec le premier dispositif de pesée (140, 240, 340) du véhicule ; et

- l'utilisation de la première valeur de mesure pour le calcul d'un poids de l'accumulateur de gaz (120) du véhicule et/ou d'un poids d'un remplissage de gaz de l'accumulateur de gaz (120).

15. Procédé de mesure selon l'une quelconque des revendications 14, dans lequel la détermination de la première valeur de mesure est effectuée plusieurs fois pendant que le véhicule est à l'arrêt, pendant un remplissage de l'accumulateur de gaz (120) avec un gaz d'un réservoir d'accumulation de gaz rempli, et/ou pendant un remplissage d'un réservoir d'accumulation de gaz avec un gaz stocké dans l'accumulateur de gaz (120) ou pendant le déplacement.

FIG 1A

FIG 1B

FIG 1C

FIG 2A

FIG 2B

FIG 2C

FIG 2D

FIG 3A

FIG 3B

FIG 3C

FIG 4

FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004050827 A1